# EUROPÄISCHE PATENTSCHRIFT

(11) **EP 0 432 375 B1**
(45) Veröffentlichungstag und Bekanntmachung des Hinweises auf die Patenterteilung: **13.04.1994**
(21) Anmeldenummer: 90116959.9
(22) Anmeldetag: 04.09.1990
(51) Int. Cl.: B60J 7/185, E05B 65/12

(54) **Verriegelungsvorrichtung für ein Verdeck**
Locking device for a folding top
Dispositif de verrouillage pour un capot de véhicule

(30) Priorität: 11.12.1989 DE 3940839
(43) Veröffentlichungstag der Anmeldung: 19.06.1991
(73) Patentinhaber: Dr.Ing.h.c. F. Porsche Aktiengesellschaft, 70435 Stuttgart (DE)
(72) Erfinder: Brin, Constantin, Dipl.-Ing., D-7000 Stuttgart 30 (DE)

(56) Entgegenhaltungen:
- DE-C- 836 291
- GB-A- 2 157 360
- US-A- 2 831 718
- US-A- 3 425 742
- US-A- 4 830 425

## Beschreibung

Die Erfindung bezieht sich auf eine Verriegelungsvorrichtung für ein Verdeck am Windschutzscheibenrahmen eines Kraftfahrzeuges gemäß dem Oberbegriff des Anspruches 1.

Aus der US-A- 2 831 718 ist eine Verriegelungsvorrichtung für ein Verdeck bekannt, wobei ein vorderes Rahmenteil des Verdecks unter Zwischenschaltung eines Dichtkörpers unmittelbar auf der horizontal verlaufenden Oberseite des Windschutzscheibenrahmens aufliegt und diesen vollständig abdeckt. Die Verriegelungsvorrichtung für das Klappverdeck umfaßt mehrere am Windschutzscheibenrahmen angebrachte, nach oben hin abstehende Halter, wobei jeder Halter seitlich eine Ausnehmung für ein Verriegelungsorgan aufweist. Jedes Verriegelungsorgan wird durch ein um eine vertikale Achse drehbares Bauteil gebildet, wobei beim Schließvorgang des Verdecks der obere Rand eines bogenförmigen, aufrechten Nockens mit einer benachbarten Begrenzungsfläche der Ausnehmung zusammenwirkt. Das Verriegelungsorgan ist über Stangen mit einer zentralen Betätigungseinrichtung verbunden.

Dieser Verriegelungsvorrichtung haftet der Nachteil an, daß die Montage der Verriegelungsvorrichtung aufwendig ist, da die einzelnen Teile lagerichtig am Windschutzscheibenrahmen und am vorderen Dachrahmen befestigt und miteinander verbunden werden müssen, um eine einwandfreie Funktion zu gewährleisten. Ferner lassen sich mit dieser Verriegelungsvorrichtung nur geringe senkrechte Hubbewegungen realisieren, d.h., das Klappverdeck muß mit erheblichem Kraftaufwand von Hand relativ weit nach oben gezogen werden, bis der Nocken in die Ausnehmung des Halters eingreift. Der in den Fahrgastraum hineinragende Betätigungsgriff und die bei geöffneten Klappverdeck vorstehenden Halter am Windschutzscheibenrahmen stellen ein beträchtliches Verletzungsrisiko für den Fahrzeugbenutzer dar.

Aufgabe der Erfindung ist es, eine Verriegelungsvorrichtung nach dem Oberbegriff zwischen dem Windschutzscheibenrahmen und einem vorderen Rahmenteil des Verdecks zu schaffen, die bei einfacher Montage eine gute Funktion aufweist und mit der große Hubbewegungen in senkrechter Richtung erzielbar sind. Ferner sollen Verletzungen durch Bauteile der Verriegelungsvorrichtung für die Fahrzeugbenutzer vermieden werden.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß die durch einen längsgerichteten Bolzen eines Schließteils und einen in Querrichtung bewegbaren mit einem Schlitten zusammenwirkenden Verriegelungshaken gebildete Verriegelungsvorrichtung im Aufbau einfach ist und eine gute Funktion aufweist. Durch die Ausgestaltung des Verriegelungshakens ist eine relativ große Hubbewegung in senkrechter Richtung erzielbar.

Ferner wird durch die fast vollständige Verkleidung der Aufnahme und der verdeckseitigen Bauteile der Verriegelungsvorrichtung das Verletzungsrisiko der Fahrzeuginsassen auch bei geöffnetem Verdeck wesentlich reduziert. Durch die Zusammenfassung der seitlich außenliegenden Verriegelungsorgane und der zentralen Betätigungseinrichtung auf einer gemeinsamen Trägerplatte wird die Montage der Verriegelungsvorrichtung am vorderen Rahmenteil des Verdecks wesentlich vereinfacht. Aufgrund der doppelten Rohrführung für den Schlitten wird eine stabile Verriegelungsvorrichtung geschaffen, mit der relativ große Kräfte aufgenommen werden können.

Ein Ausführungsbeispiel der Erfindung ist in der Zeichnung dargestellt und wird im folgenden näher erläutert.

Es zeigt
- Fig. 1: eine Ieilseitenansicht eines Personenwagens mit einem Klappverdeck,
- Fig. 2: eine Draufsicht auf eine Verriegelungsvorrichtung für das Klappverdeck und den angrenzenden Aufbau,
- Fig. 3: einen Schnitt nach der Linie III-III der Fig. 2,
- Fig. 4: einen Schnitt nach der Linie IV-IV der Fig. 2,
- Fig. 5: einen Schnitt nach der Linie V-V der Fig. 4,
- Fig. 6: einen Schnitt nach der Linie VI-VI der Fig. 2,
- Fig. 7: einen Schnitt nach der Linie VII-VII der Fig. 6,
- Fig. 8: eine Ansicht in Pfeilrichtung R der Fig. 7 in der Verriegelungsstellung,
- Fig. 9: eine Ansicht in Pfeilrichtung R der Fig. 7 in der Entriegelungsstellung,

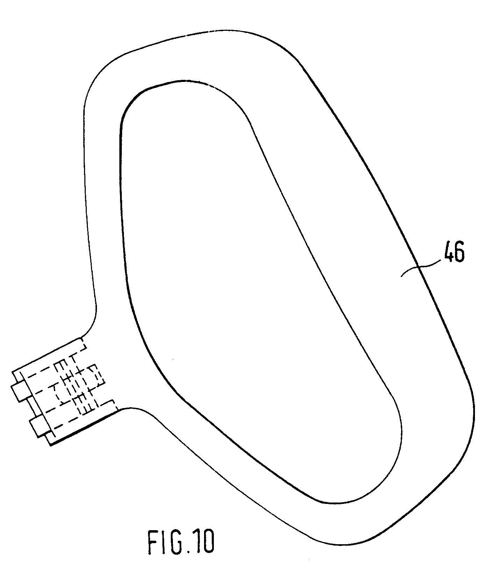

- Fig. 10: eine Ansicht in Pfeilrichtung S der Fig. 6,
- Fig. 11: eine Ansicht entsprechend Fig. 2 mit einer weiteren Ausführungsform der Verriegelungsvorrichtung,
- Fig. 12: einen Schnitt der Linie XII-XII der Fig. 11.

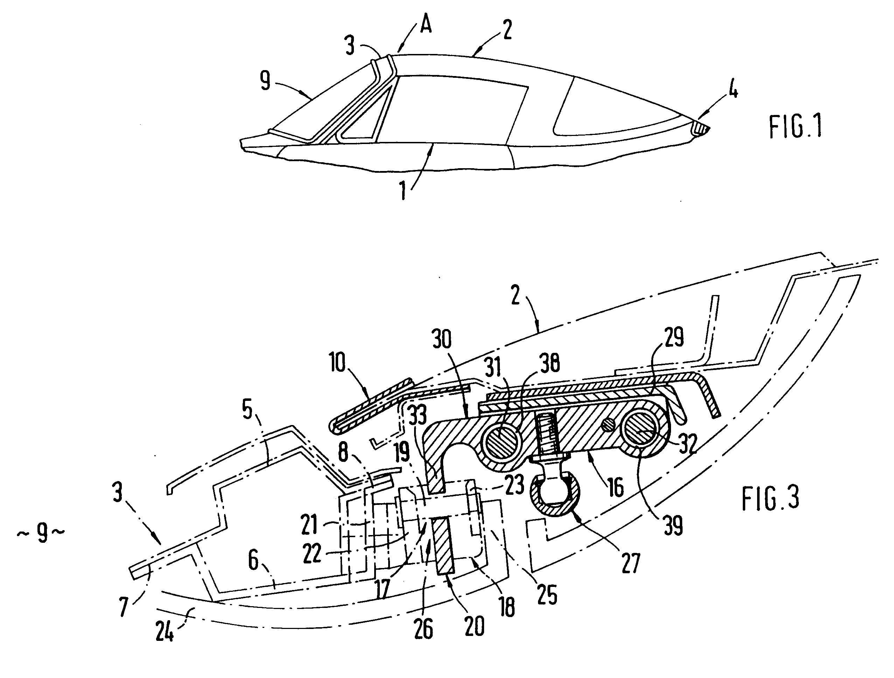

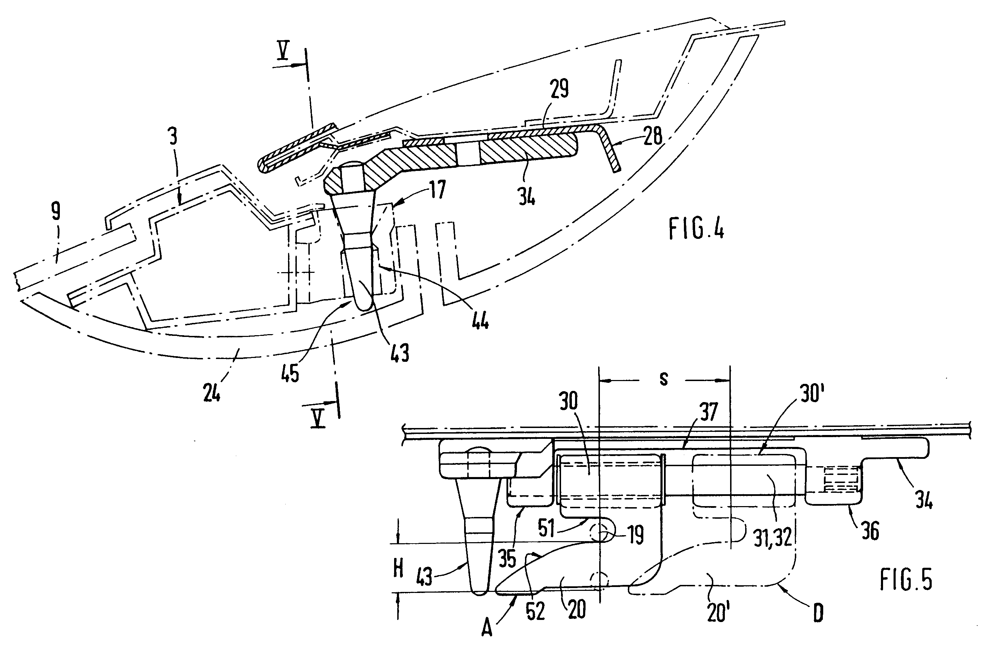

Der in Fig. 1 dargestellte Teilbereich eines Personenwagens weist oberhalb einer Gürtellinie 1 ein Klappverdeck 2 auf, das sich in seiner Schließstellung A zwischen einem Windschutzscheibenrahmen 3 und einem Heckbereich 4 erstreckt und lösbar am Windschutzscheibenrahmen 3 in Lage gehalten ist. Der Windschutzscheibenrahmen 3 setzt sich aus zwei Profilteilen 5 und 6 zusammen, die an gleichgerichteten Flanschen 7 bzw. 8 durch Schweißen miteinander verbunden sind (Fig. 3).

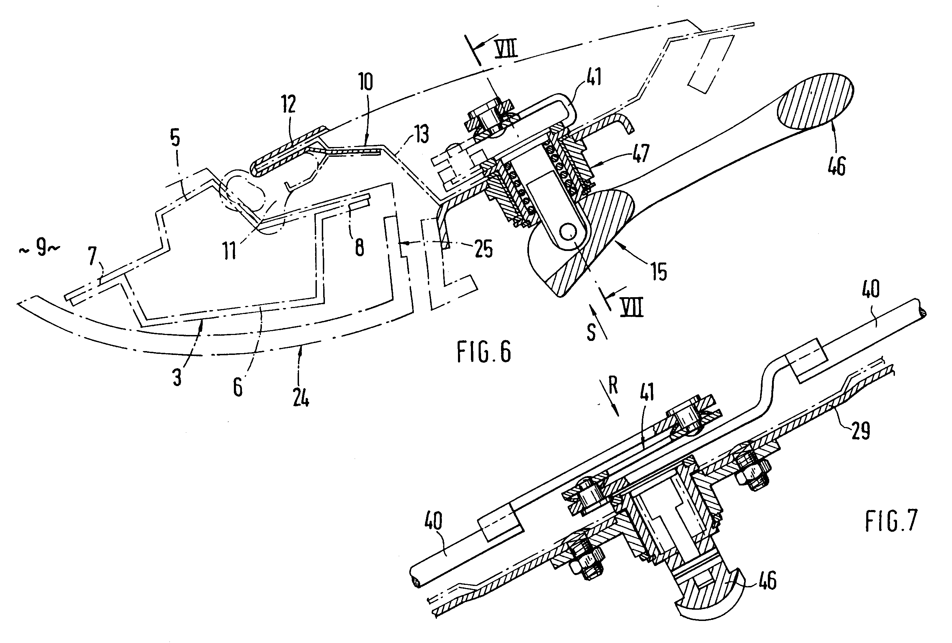

Auf dem einer Windschutzscheibe 9 abgekehrten Flansch 8 des Windschutzscheibenrahmens 3 liegt ein Randbereich eines vorderen Rahmenteiles 10 des Klappverdecks 2 unter Vermittlung eines Dichtkörpers 11 auf. Das querverlaufende, vordere Rahmenteil 10 setzt sich aus Blechpreßteilen 12, 13 zusammen, die durch Schweißen, Kleben oder dgl. miteinander verbunden sind (Fig. 6).

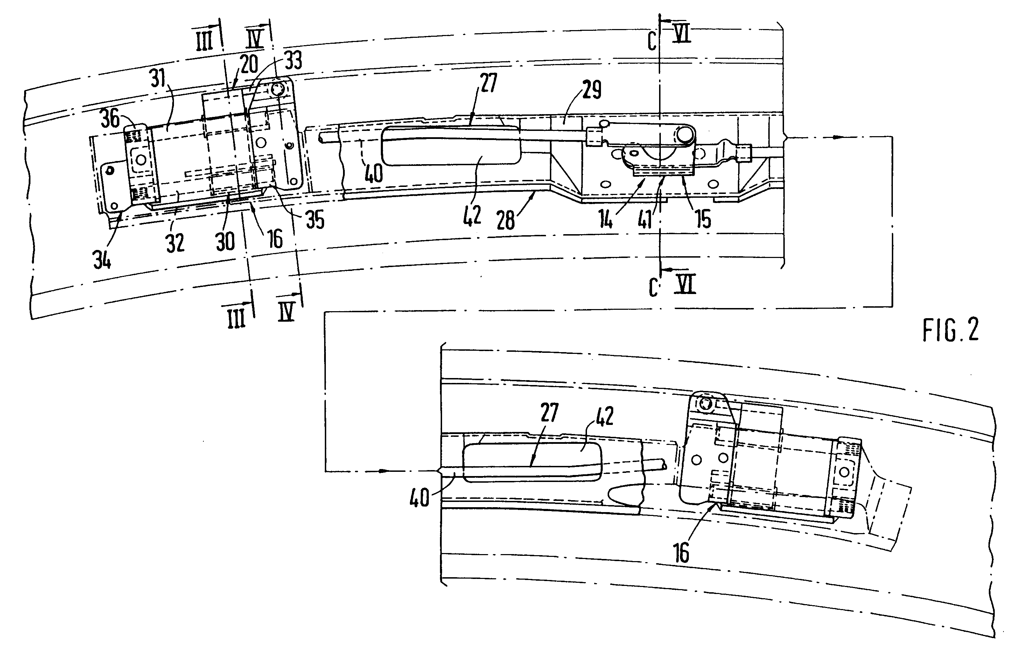

Zur Fixierung des Klappverdecks 2 am Windschutzscheibenrahmen 3 ist eine Verriegelungsvorrichtung 14 vorgesehen, die im wesentlichen aus einer zentralen Betätigungseinrichtung 15, zwei seitlich außenliegenden Verriegelungsorganen 16 und und zwei am Windschutzscheibenrahmen 3 angeordneten Aufnahmen 17 besteht (Fig. 2 und 3).

Die lediglich von oben her zugängliche Aufnahme 17 wird durch ein am Windschutzscheibenrahmen 3 befestigtes Schließteil 18 gebildet, an dem örtlich ein etwa horizontal ausgerichteter, annähernd in Fahrzeuglängsrichtung verlaufender Bolzen 19 angebracht ist, der beim Öffnen und Schließen des Klappverdecks 2 mit einem in Fahrzeugquerrichtung linear verschiebbar geführten Verriegelungshaken 20 des Verriegelungsorganes 16 in Wirkverbindung steht. Das Schließteil 18 ist an einem aufrechten Flansch 21 des Profilteiles 6 befestigt und weist zwei - in Längsrichtung gesehen - beabstandete, querverlaufende Wände 22, 23 auf, zwischen denen sich der Bolzen 19 erstreckt (Fig. 3). Der Bolzen 19 ist endseitig durch beide Wände 22, 23 hindurchgeführt und mit diesen fest verbunden (beispielsweise durch Vernieten).

Zwischen den Wänden 22, 23 erstreckt sich - in Querrichtung gesehen - ein Freiraum 26 zur Aufnahme und zum geradlinigen Bewegen des Verriegelungshakens 20 in Fahrzeugquerrichtung. Der Freiraum 26 ist nach oben und unten hin offen (Fig. 3).

Die Aufnahme 17 am Windschutzscheibenrahmen 3 ist von unten und von vorne her durch eine Verkleidung 24 abgedeckt, wobei die der Windschutzscheibe 9 abgekehrte Stirnseite 25 der Verkleidung 24 etwa bis zum Flansch 8 des Windschutzscheibenrahmens 3 hochgezogen ist.

Gemäß Fig. 2 sind die beiden außenliegenden Verriegelungsorgane 16, die mittige Betätigungseinrichtung 15 sowie die dazwischenliegenden Verbindungselemente 27 zu einer vorgefertigten funktionsfähigen Baueinheit 28 zusammengefaßt, die einer gemeinsamen Trägerplatte 29 zugeordnet ist. Die Trägerplatte 29 erstreckt sich über den wesentlichen Teil der Breite des Klappverdecks 2 und ist am vorderen Rahmenteil 10 des Klappverdecks 2 durch Schrauben oder dgl. befestigt. Es besteht aber auch die Möglichkeit, die Bauteile der Verriegelungsvorrichtung 14 einzeln am vorderen Rahmenteil 10 des Klappverdecks 2 zu befestigen und auf die Trägerplatte 29 zu verzichten.

Der Verriegelungshaken 20 ist einstückig mit einem Schlitten 30 ausgebildet, der auf zwei mit Abstand zueinander angeordneten, gleichgerichteten Rohrführungen 31, 32 sitzt und in begrenztem Umfang in Fahrzeugquerrichtung B-B verschiebbar ist. Gemäß Fig. 3 wird der Verriegelungshaken 20 durch eine etwa vertikal verlaufende, nach unten gerichtete Anformung 33 des annähernd horizontal ausgerichteten Schlittens 30 gebildet. Die Anformung 33 ist auf der der Aufnahme 17 zugekehrten Seite des Schlittens 30 angeordnet und ragt in den Freiraum 26 der Aufnahme 17 hinein. Gemäß Fig. 3 überragt die Anformung das Schließteil 18 nach unten hin um einen geringen Betrag. Der Verriegelungshaken 20 erstreckt sich in Fahrzeugquerrichtung und weist eine längliche horizontal ausgerichtete Schlitzführung 51 auf, in der sich der Bolzen 19 bei geschlossenem Klappverdeck 2 (Schließstellung A) befindet. Durch die horizontale Ausrichtung der Schlitzführung 51 sind bei verriegeltem Klappverdeck 2 keine Horizontalkräfte wirksam, sondern nur eine nach oben gerichtete unendlich große Kraft. Der einseitig offenen Schlitzöffnung 51 vorgelagert ist eine schiefe Ebene 52 bzw. ein bogenförmiger nach unten gerichteter Bahnabschnitt, der mit dem Bolzen 19 beim Öffnen und Schließen des Klappverdecks 2 zusammenwirkt. Durch die schiefe Ebene 52 bzw. den gebogenen Bahnabschnitt wird das Klappverdeck 2 beim Schließen um den Hub H nach unten gezogen (Fig. 5). Die offene Seite der Schlitzöffnung 51 ist der Fahrzeuglängsmittelebene C-C zugekehrt.

Die Rohrführungen 31, 32 sind an einer an der Trägerplatte 29 befestigten Konsole 34 angeordnet. Entsprechend Fig. 5 sind die querverlaufenden Rohrführungen 31, 32 endseitig in Lagerabschnitten 35, 36 der Konsole 34 aufgenommen, wogegen der dazwischenliegende Bereich der Rohrführungen 31, 32 mit Abstand zu einem Bodenabschnitt 37 der Konsole 34 verläuft. Der Schlitten 30 sitzt unter Vermittlung von Lagerbuchsen 38, 39 auf den Rohrführungen 31, 32. Ferner ist jeder Schlitten 30 über das Verbindungselement 27 mit der Betätigungseinrichtung 15 verbunden. Das Verbindungselement 27 wird durch eine Zugstange 40 gebildet, welche einerseits an den Schlitten 30 und andererseits an ein Drehkreuz 41 der Betätigungseinrichtung 15 angeschlossen ist. Die Zugstange 40 ist örtlich durch eine rechteckförmige Ausnehmung 42 der Trägerplatte 29 hindurchgeführt. Die Verbindung zwischen Zugstange 40 und Schlitten 30 erfolgt gemäß Fig. 3 über eine Kugelkopfverbindung. Es besteht aber auch die Möglichkeit, die Zugstange 40 über eine andere gelenkige Verbindung an den Schlitten 30 anzuschließen.

In der Schließstellung A befindet sich der Schlitten 30 mit dem Verriegelungshaken 20 benachbart dem innenliegenden Lagerabschnitt 35 der Konsole 34, wogegen in der Entriegelungsstellung D der Verriegelungsvorrichtung 14 der Schlitten 30 benachbart dem anderen äußeren Lagerabschnitt 36 verläuft (Stellung 30'). An der Konsole 34 ist ferner ein nach unten ragender Zentrierzapfen 43 angeordnet, der mit einer korrespondierenden Öffnung 44 der Aufnahme 17 eine Zentriereinrichtung 45 für das Klappverdeck 2 bildet. Konisch ausgebildete Endabschnitte des Zentrierzapfens 43 und der Öffnung 44 erleichtern das Einführen des Zentrierzapfens 43, wogegen in der Arretierstellung ein spielfreier Sitz des Zentnerzapfens 43 in der Öffnung 44 gegeben ist. In der Arretierstellung wirkten ein zylindrischer Bund des Zentrierzapfens 43 mit einem korrespondierend zylindrischen Abschnitt der Öffnung 44 formschlüssig zusammen.

Beim Verriegeln des Klappverdecks 2 bewegt sich der Schlitten 30 mit dem Verriegelungshaken 20 von außen nach innen (Weg s).

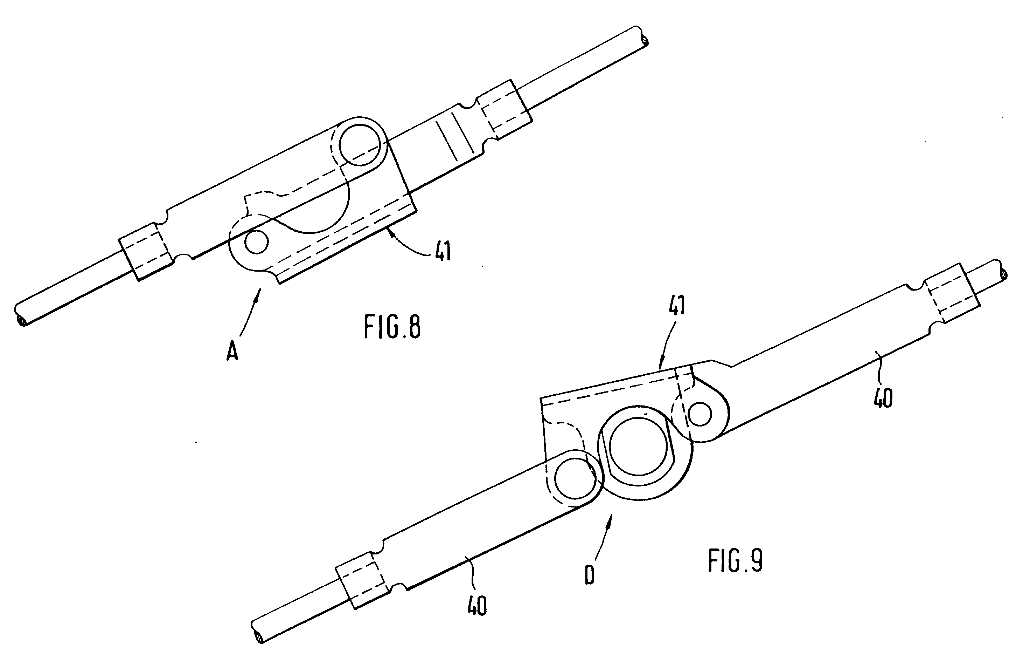

Gemäß einer ersten Ausführungsform (Fig. 6) besteht die Betätigungseinrichtung 15 aus einem dreh- und schwenkbaren Handgriff 46, der über eine Lagerung 47 mit dem Drehkreuz 41 verbunden ist. Mit einer Hand wird das Klappverdeck 2 durch den bügelförmigen Handgriff 46 nach unten gezogen, das Klappverdeck 2 verriegelt und anschließend der Handgriff 46 in eine versenkte Ruhestellung hochgeschwenkt, wodurch ein guter Bedienungskomfort erzielt wird. In der entriegelten Stellung D (Fig. 9) nehmen die Zugstangen 40 ihre gestreckte Lage ein. Die verriegelte Stellung A der Zugstangen 40 bzw. des Drehkreuzes 41 ist in Fig. 8 dargestellt. Bei verriegeltem Klappverdeck 2 ist eine dreifache Sicherung gegen ein Lösen der Verriegelungsvorrichtung 14 vorhanden. Durch die horizontale Ausrichtung der länglichen Schlitzöffnung 51 treten keine horizontalen Kräfte auf, d.h. alle Bauteile der Verriegelungsvorrichtung 14 sind im Verriegelungszustand spannungslos. Ferner weist der Handgriff 46 in der Verriegelungsstellung eine Übertotpunktlage ein, wodurch ein Lösen der Verriegelungsvorrichtung (14) vermieden wird. Außerdem läßt sich der bügelförmige Handgriff (46) in der hochgeklappten Ruhestellung nicht verdrehen.

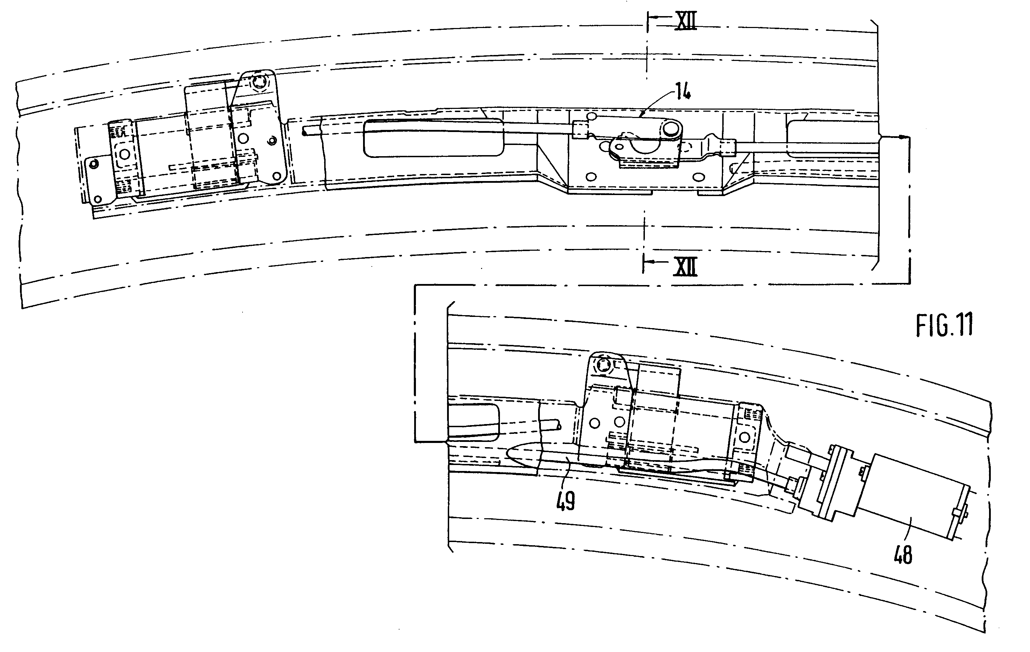

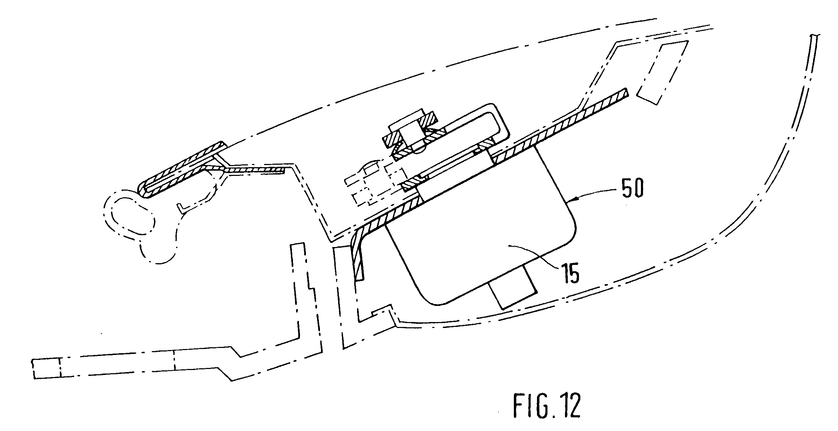

Bei einer zweiten Ausführungsform wird die Verriegelungsvorrichtung 14 motorisch betätigt. Hierzu ist am vorderen Rahmenteil 10 und zwar in einem seitlich außenliegenden Bereich in Elektromotor 48 mit einem Getriebe vorgesehen, der über eine biegsame Welle 49 mit einem Schneckengetriebe 50 der mittig angeordneten Betätigungseinrichtung 15 zusammenwirkt (Fig. 11 und 12).

## Patentansprüche

1. Verriegelungsvorrichtung für ein Verdeck am Windschutzscheibenrahmen (3) eines Kraftfahrzeuges, insbesondere für ein Klappverdeck (2), die eine an einem vorderen Rahmenteil (10) des Verdecks (2) etwa im Bereich einer Fahrzeuglängsmittelebene angeordnete zentrale Betätigungseinrichtung (15) umfaßt, die über querverlaufende Verbindungselemente (27) an seitlich außenliegende Verriegelungsorgane (16) angeschlossen ist, wobei die Verriegelungsorgane (16) bei geschlossenem Verdeck mit am Windschutzscheibenrahmen (3) angebrachten Aufnahmen zusammenwirken, dadurch gekennzeichnet, daß die lediglich von oben her zugängliche Aufnahme (17) durch ein am Windschutzscheibenrahmen (3) befestigtes Schließteil (18) gebildet wird, an dem örtlich ein etwa horizontal ausgerichteter, annähernd in Fahrzeuglängsrichtung verlaufender Bolzen (19) angebracht ist, der beim Öffnen und Schließen des Klappverdecks (2) mit einem in das Schließteil (18) hineinragenden, in Fahrzeugquerrichtung verschiebbar geführten Verriegelungshaken (20) des Verriegelungsorganes (16) in Wirkverbindung steht.

2. Verriegelungsvorrichtung nach Anspruch 1, dadurch gekennzeichnet, daß der Bolzen (19) an zwei beabstandeten querverlaufenden Wänden (22, 23) des Schließteils (18) gelagert ist.

3. Verriegelungsvorrichtung nach Anspruch 1, dadurch gekennzeichnet, daß in Querrichtung gesehen zwischen den beiden beabstandeten Wänden (22, 23) ein Freiraum (26) zum Einführen und Bewegen des Verriegelungshakens (20) vorgesehen ist.

4. Verriegelungsvorrichtung nach Anspruch 1, dadurch gekennzeichnet, daß sich eine Verkleidung (24) für den Windschutzscheibenrahmen (3) entlang einer Unterseite und einer aufrechten Stirnseite des Windschutzscheibenrahmens (3) erstreckt.

5. Verriegelungsvorrichtung nach Anspruch 1, dadurch gekennzeichnet, daß die beiden seitlich außenliegenden Verriegelungsorgane (16), die mittige Betätigungseinrichtung (15) und die Verbindungselemente (27) eine vorgefertigte funktionsfähige Baueinheit (28) bilden, die an einer gemeinsamen Trägerplatte (29) angeordnet ist.

6. Verriegelungsvorrichtung nach Anspruch 1, dadurch gekennzeichnet, daß der Verriegelungshaken (20) einstückig mit einem Schlitten (30) ausgebildet ist.

7. Verriegelungsvorrichtung nach Anspruch 6, dadurch gekennzeichnet, daß der Verriegelungshaken (20) durch eine etwa vertikal verlaufende Anformung (33) des annähernd horizontal ausgerichteten Schlittens (30) gebildet wird, wobei die Anformung (30) an der der Aufnahme (17) zugekehrten Seite des Schlittens (30) angeordnet ist.

8. Verriegelungsvorrichtung nach Anspruch 6, dadurch gekennzeichnet, daß der Schlitten (30) auf zwei mit Abstand zueinander angeordneten, gleichgerichteten Rohrführungen (31, 32) sitzt und in begrenztem Umfang in Fahrzeugquerrichtung B-B verschiebbar ist.

9. Verriegelungsvorrichtung nach Anspruch 8, dadurch gekennzeichnet, daß die Rohrführungen (31, 32) an einer an der Trägerplatte (29) befestigten Konsole (34) des Verriegelungsorganes (16) angebracht sind.

10. Verriegelungsvorrichtung nach Anspruch 6, dadurch gekennzeichnet, daß jeder Schlitten (30) über ein durch eine Zugstange (40) gebildetes Verbindungselement (27) mit der zentralen Betätigungseinrichtung (15) verbunden ist.

11. Verriegelungsvorrichtung nach Anspruch 1, dadurch gekennzeichnet, daß der Verriegelungshaken (30) eine einseitig offene, längliche Schlitzöffnung (51) aufweist, der eine nach unten gerichtete schiefe Ebene (52) oder ein kurvenförmig gebogener Bahnabschnitt vorgelagert ist, wobei sich der Bolzen (19) bei geschlossenem Klappverdeck (2) innerhalb der horizontal ausgerichteten länglichen Schlitzöffnung erstreckt und am Verriegelungshaken (20) anliegt.

12. Verriegelungsvorrichtung nach Anspruch 11, dadurch gekennzeichnet, daß die offene Seite der Schlitzöffnung (51) der Fahrzeuglängsmittelebene zugekehrt ist.

13. Verriegelungsvorrichtung nach Anspruch 1, dadurch gekennzeichnet, daß zusätzlich zur Verriegelungsvorrichtung (14) eine Zentriereinrichtung (45) für das Klappverdeck (2) vorgesehen ist, die durch einen an der Konsole (34) angebrachten, nach unten ragenden Zentrierzapfen (43) gebildet wird, der in eine korrespondierende Öffnung (44) der Aufnahme (17) eingreift.

14. Verriegelungsvorrichtung nach Anspruch 6, dadurch gekennzeichnet, daß die Zugstangen (40) mit einem Drehkreuz (41) der Betätigungseinrichtung (15) drehbar verbunden sind, wobei das Drehkreuz (41) auf der einen Handgriff (46) abgekehrten Seite der Betätigungseinrichtung (15) angeordnet ist und zwar innerhalb des Rahmenteils (10).

15. Verriegelungsvorrichtung nach Anspruch 1, dadurch gekennzeichnet, daß sich beim Verriegeln des Klappverdecks (2) die Verriegelungshaken (20) von außen nach innen um den Weg S bewegen und den Bolzen (19) umgreifen.

## Claims

1. A device for locking a top on the windscreen frame (3) of a motor vehicle, in particular for a folding top (2), comprising a central actuating device (15) which is arranged on a front frame part (10) of the top (2) substantially in the region of a longitudinal median plane of the vehicle and which is attached by way of transversely extending connecting members (27) to locking members (16) situated laterally on the outside, wherein the locking members (16) cooperate with receiving means mounted on the windscreen frame (3) when the top is closed, **characterized in that** the receiving means (17) accessible only from above is formed by a closure part (18) which is secured to the windscreen frame (3) and on which a pin (19) orientated substantially horizontally and extending substantially in the longitudinal direction of the vehicle is formed locally, wherein the pin (19) is operatively connected during the opening and closing of the folding top (2) to a locking hook (20) of the locking member (16) projecting into the closure part (18) and guided displaceably in the transverse direction of the vehicle.

2. A locking device according to Claim 1, **characterized in that** the pin (19) is mounted on two spaced, transversely extending walls (22, 23) of the closure part (18).

3. A locking device according to Claim 1, **characterized in that** a free space (26) is provided between the two spaced walls (22, 23) as viewed in the transverse direction for the insertion and movement of the locking hook (20).

4. A locking device according to Claim 1, **characterized in that** a covering (24) for the windscreen frame (3) extends along an underside and a vertical front face of the windscreen frame (3).

5. A locking device according to Claim 1, **characterized in that** the two locking members (16) situated laterally on the outside, the central actuating device (15) and the connecting members (27) form a prefabricated, operatively viable structural unit (28) mounted on a common support plate (29).

6. A locking device according to Claim 1, **characterized in that** the locking hook (20) is integral with a slide (30).

7. A locking device according to Claim 6, **characterized in that** the locking hook (20) is formed by an integral attachment (33) - extending substantially vertically - of the slide (30) orientated substantially horizontally, wherein the integral attachment (33) is mounted on the side of the slide (30) facing the receiving means (17).

8. A locking device according to Claim 6, **characterized in that** the slide (30) rests on two tubular guides (31, 32) orientated in the same direction and arranged at a distance from each other and is displaceable to a limited extent in the transverse direction **B-B** of the vehicle.

9. A locking device according to Claim 8, **characterized in that** the tubular guides (31, 32) are mounted on a bracket (34) of the locking member (16) which is secured to the support plate (29).

10. A locking device according to Claim 6, **characterized in that** each slide (30) is connected to the central actuating device (15) by way of a connecting member (27) formed by a connecting rod (40).

11. A locking device according to Claim 1, **characterized in that** the locking hook (30) comprises an elongate slot opening (51) open on one side and having mounted in front thereof a downwardly directed inclined plane (52) or a path portion bent into a curve, wherein when the folding top (2) is closed the pin (19) extends inside the horizontally orientated elongate slot opening and rests against the locking hook (20).

12. A locking device according to Claim 11, **characterized in that** the open side of the slot opening (51) faces the longitudinal median plane of the vehicle.

13. A locking device according to Claim 1, **characterized in that** in addition to the locking device (14) a centring device (45) is provided for the folding top (2), the centring device (45) being formed by a downwardly projecting centring pin (43) attached to the bracket (34) and engaging in a corresponding opening (44) in the receiving means (17).

14. A locking device according to Claim 6, **characterized in that** the connecting rods (40) are connected in a rotatable manner to a rotary star (41) of the actuating device (15), wherein the rotary star (41) is mounted on the side of the actuating device (15) remote from a handle (46), namely inside the frame part (10).

15. A locking device according to Claim 1, **characterized in that** when the folding top (2) is locked the locking hooks (20) move inwards from the outside around the path **S** and engage around the pin (19).

## Revendications

1. Dispositif de verrouillage pour une capote montée sur le cadre de pare-brise (3) d'un véhicule automobile, en particulier pour une capote rabattable (2), comprenant un dispositif d'actionnement (15) central, disposé sur une partie de cadre avant (10) de la capote (2), à peu près dans la zone du plan médian longitudinal de véhicule, et raccordé, par l'intermédiaire d'éléments de liaison (27 s'étendant transversalement, à des organes de verrouillage (16) situés extérieurement et latéralement, les organes de verrouillage (16) coopérant, lorsque la capote est fermée, avec des logements ménagés sur le cadre de pare-brise (3), caractérisé en ce que le logement (17), qui est seulement accessible par le haut, est formé d'une partie de fermeture (18), fixée sur le cadre de pare'brise (3) et sur laquelle est montée localement une tige (19), orientée à peu près horizontalement en s'étendant à peu près dans la direction longitudinale du véhicule et reliée fonctionnellement à un crochet de verrouillage (20) de l'organe de verrouillage (16), guidé déplaçable dans la direction transversale du véhicule, en pénétrant dans la partie de fermeture (18), lors de l'ouverture et de la fermeture de la capote rabattable (2).

2. Dispositif de verrouillage selon la revendication 1, caractérisé en ce que la tige (19) est montée sur deux parois (22, 23), s'étendant espacées et transversalement, de la partie de fermeture (18).

3. Dispositif de verrouillage selon la revendications 1, caractérisé en ce qu'en observant dans la direction transversale, un espace libre (26) servant à l'introduction et au déplacement du crochet de verrouillage (20), est prévu entre les deux parois (22, 23) espacées l'une de l'autre.

4. Dispositif de verrouillage selon la revendication 1, caractérisé en ce qu'un garnissage (24) destiné au cadre de pare-brise (3) s'étend le long d'une face inférieure et d'une face frontale, verticale, du cadre de pare-brise (3).

5. Dispositif de verrouillage selon la revendication 1, caractérisé en ce que les deux organes de verrouillage (16) situés extérieurement et latéralement forment le dispositif d'actionnement (15) central et les éléments de liaison (27) forment un ensemble de construction (28) fonctionnel et préfabriqué, disposé sur une plaque support (29) commune.

6. Dispositif de verrouillage selon la revendication 1, caractérisé en ce que le crochet de verrouillage (20) est réalisé d'un seul tenant avec un chariot (30).

7. Dispositif de verrouillage selon la revendication 7, caractérisé en ce que le crochet de verrouillage (20) est formé par une excroissance (33) s'étendant à peu près verticalement du chariot (30) orienté à peu près horizontalement, l'excroissance (33) étant disposée du côté du chariot (30) tourné vers le logement (17).

8. Dispositif de verrouillage selon la revendication 6, caractérisé en ce que le chariot (30) repose sur deux guidages tubulaires (31, 32) disposés à distance l'un de l'autre et ayant la même orientation et est déplaçable sur une course limitée dans la direction transversale B-B du véhicule.

9. Dispositif de verrouillage selon la revendication 8, caractérisé en ce que les guidages tubulaires (31, 32) sont montés sur une console (34), fixée sur la plaque support (29) de l'organe de verrouillage (16).

10. Dispositif de verrouillage selon la revendication 6, caractérisé en ce que chaque chariot (30) est relié au dispositif d'actionnement (15) central par l'intermédiaire d'un élément de liaison (27) formé par une bielle (40).

11. Dispositif de verrouillage selon la revendication 1, caractérisé en ce que le crochet de verrouillage (30) présente une ouverture de fente (51) allongée, ouverte d'un côté, à l'avant de laquelle est réalisée un plan (52) oblique descendant ou un tronçon de piste incurvé, la tige (19) s'étendant à l'intérieur de l'ouverture de fente orientée horizontalement lorsque la capote (2) est fermée et appuyant sur le crochet de verrouillage (20).

12. Dispositif de verrouillage selon la revendication 11, caractérisé en ce que le côté ouvert de l'ouverture de fente (51) est tourné vers le plan médian longitudinal du véhicule.

13. Dispositif de verrouillage selon la revendication 1, caractérisé en ce qu'en plus du dispositif de verrouillage (14) est prévu pour la capote rabattable (2) un dispositif centreur (45), formé par un tourillon de cent rage (43) monté sur la console (34), se projetant vers le bas, s'engageant dans une ouverture (4) correspondante du logement (17).

14. Dispositif de verrouillage selon la revendication 6, caractérisé en ce que les bielles (40) sont reliées de façon à pouvoir tourner à une croix tournante (41) du dispositif d'actionnement (15), la croix tournante (41) étant disposée d'un côté, opposé à une poignée (46) , du dispositif d'actionnement (15), notamment à l'intérieur de la partie cadre (10).

15. Dispositif de verrouillage selon la revendication 1, caractérisé en ce que, lors du verrouillage de la capote rabattable (2), les crochets de verrouillage (20) se déplacent de l'extérieur vers l'intérieur, en suivant une course en S, et enchâssent la tige (19).
